(19) 

Europäisches Patentamt
European Patent Office
Office européen des brevets

(11) **EP 4 589 729 A1**

(12) **EUROPEAN PATENT APPLICATION**
published in accordance with Art. 153(4) EPC

(43) Date of publication:
**23.07.2025 Bulletin 2025/30**

(51) International Patent Classification (IPC):
***H01M 10/613*** (2014.01)   ***H01M 50/20*** (2021.01)

(21) Application number: **22958433.9**

(52) Cooperative Patent Classification (CPC):
**H01M 10/613; H01M 50/20;** Y02E 60/10

(22) Date of filing: **15.09.2022**

(86) International application number:
**PCT/CN2022/119031**

(87) International publication number:
**WO 2024/055240 (21.03.2024 Gazette 2024/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
(Hong Kong) Limited
Central, Hong Kong (HK)**

(72) Inventors:
• **XU, Chenyi
Ningde, Fujian 352100 (CN)**

• **TANG, Yu
Ningde, Fujian 352100 (CN)**
• **LI, Xing
Ningde, Fujian 352100 (CN)**
• **ZHANG, Chenchen
Ningde, Fujian 352100 (CN)**
• **WANG, Peng
Ningde, Fujian 352100 (CN)**
• **HUANG, Xiaoteng
Ningde, Fujian 352100 (CN)**

(74) Representative: **Ran, Handong
Maucher Jenkins
Seventh Floor Offices
Artillery House
11-19 Artillery Row
London SW1P 1RT (GB)**

(54) **BATTERY PACK AND ELECTRICAL DEVICE**

(57)    The present application discloses a battery pack and an electrical device. The battery pack comprises: a box body, having an accommodating space provided therein; a beam body, provided in the accommodating space to divide the accommodating space into a plurality of accommodating sub-cavities; a liquid cooling plate, attached to one side of the beam body facing the accommodating sub-cavity, the liquid cooling plate being welded to the beam body, and a welding seam being formed at the welding position; an insulating layer, attached to one side of the liquid cooling plate facing the accommodating sub-cavity, and at least covering the welding seam; and a plurality of battery cells, provided in the accommodating sub-cavities, and connected to the insulating layer and the liquid cooling plate, so as to perform heat exchange with the liquid cooling plate. Compared with the prior art, in the present application, the liquid cooling plate and the insulating layer are sequentially arranged on the beam body, and the insulating layer shields the welding seam on the liquid cooling plate, thereby avoiding a short circuit of the battery due to the fact that burrs at the welding seam pierce insulating films wrapped around the battery cells, and realizing insulation protection between the welding seam and the battery cells.

FIG. 5

## Description

## TECHNICAL FIELD

This application relates to the field of battery technologies, and in particular, to a battery pack and an electric apparatus.

## BACKGROUND

Currently, from the perspective of market development, application of traction batteries is being more extensive. Traction batteries have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace. With the continuous expansion of application fields of traction batteries, market demands for traction batteries are also increasing.

Generally, a battery pack includes a plurality of battery modules, and the plurality of battery modules are placed into a housing. How to effectively insulate and protect the battery modules has become an important research direction in the art.

## SUMMARY

In consideration of the foregoing issue, this application provides a battery pack and an electric apparatus to solve the technical problems in the art and effectively insulate and protect the battery modules.

According to a first aspect, this application provides a battery pack, including:

> a box with an accommodating space inside;
> a beam body, disposed in the accommodating space to divide the accommodating space into multiple accommodating sub-chambers;
> a liquid cooling plate, attached to one side of the beam body facing the accommodating sub-chambers, where the liquid cooling plate is connected to the beam body through welding, and a weld joint is formed at a welding position;
> an insulating layer, attached to one side of the liquid cooling plate facing the accommodating sub-chamber, and at least covering the weld joint; and
> multiple battery cells, disposed within the accommodating sub-chamber and connected to the insulating layer and the liquid cooling plate to perform heat exchange with the liquid cooling plate.

In the technical solutions of the embodiments of this application, the liquid cooling plate and the insulating layer are sequentially provided on the beam body, and the insulating layer covers the weld joint on the liquid cooling plate. This prevents burrs at the weld joint from piercing an insulating film wrapped around the battery cell and then resulting in a short circuit, implementing insulation protection between the weld joint and the battery cell.

In some embodiments, the welding is friction stir welding. This allows for a more secure connection between the liquid cooling plate and the beam body. Additionally, the friction stir welding process is simple and provides good sealing performance and high production efficiency at low costs.

In some embodiments, a dimension of the insulating layer satisfies a first formula, where

the first formula includes:

$$1.2*W1<W2,$$

where W1 represents a height of the weld joint, and W2 represents a height of the insulating layer. The height of the insulating layer satisfies the first formula, which not only provides effective insulation protection for the battery cell, but also allows the battery cell to have high heat exchange efficiency.

In some embodiments, the dimension of the insulating layer satisfies a second formula, where

the second formula includes:

$$4*W2<W3,$$

where W3 represents a width of the battery cell. Most of the region of the battery cell comes into contact with the liquid cooling plate for heat exchange. A heat exchange medium flowing in a flow channel provided within the liquid cooling plate carries away the heat from the battery cell, thereby cooling the battery cell.

In some embodiments, the dimension of the insulating layer satisfies a third formula, where
the third formula includes:
0.5 mm<d<1.5 mm, where d represents a thickness of the insulating layer. Within the range of the third formula, the thickness of the insulating layer can satisfy the insulation requirements without affecting the adhesion strength and heat exchange performance between the battery cell and the liquid cooling plate.

In some embodiments, a material of the insulating layer includes but is not limited to a PC sheet, a TC composite tape, or mica paper, as long as the insulation protection requirements can be satisfied.

In some embodiments, the liquid cooling plate is disposed on each of two opposite sides of the beam body in a width direction. This arrangement can improve the cooling efficiency of the battery cells, improve the space utilization within the battery pack, and avoid an increase in volume and weight of the battery pack caused by the beam body added, allowing the battery pack to have high energy density.

In some embodiments, multiple groups of battery cells are provided in each of the accommodating sub-chambers, where the multiple groups of battery cells extend along a length direction of the liquid cooling plate, each group of the battery cells includes two battery cells, and the two battery cells are stacked along a height direction of the liquid cooling plate. This arrangement can improve the cooling efficiency of the battery cells, and allow for an effect of uniformly cooling the upper and lower battery cells.

In some embodiments, a preset cavity is formed in the beam body, and a preset through hole is provided on the liquid cooling plate. The preset through hole sequentially runs through the liquid cooling plate and a wall surface of the beam body until the preset through hole communicates with the preset cavity. The battery cell is provided with an explosion-proof valve, and an exhaust end of the explosion-proof valve extends into the preset cavity from the preset through hole. The preset cavity with a long path is conducive to reducing the temperature and decreasing the particulate substances, thereby lowering the risk of high-pressure failure caused by the ejected substances. This also saves an exhaust space within the battery pack outside the beam body, improving the pack assembly efficiency and energy density of the battery pack.

According to a second aspect, this application provides an electric apparatus including the foregoing battery pack, where the battery pack is configured to supply electrical energy.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

## BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, the same reference signs represent the same components. In the accompanying drawings:

FIG. 1 is an axonometric view of a battery pack according to an embodiment of this application;
FIG. 2 is a schematic exploded view of a battery pack according to an embodiment of this application;

FIG. 3 is a top view of a battery pack with a cover plate hidden according to an embodiment of this application;
FIG. 4 is an axonometric view of a battery module according to an embodiment of this application;
FIG. 5 is a schematic enlarged view of part A in FIG. 4;
FIG. 6 is an axonometric view of a battery module with parts of battery cells hidden according to an embodiment of this application;
FIG. 7 is a front view of a battery module according to an embodiment of this application;
FIG. 8 is a schematic enlarged view of part B in FIG. 7;
FIG. 9 is an axonometric view of a beam body according to an embodiment of this application;
FIG. 10 is a schematic exploded view of a beam body and liquid cooling plates according to an embodiment of this application;
FIG. 11 is an axonometric view of a liquid cooling plate according to an embodiment of this application;
FIG. 12 is a cross-sectional view of a liquid cooling plate according to an embodiment of this application;
FIG. 13 is a cross-sectional view of part C-C in FIG. 12; and
FIG. 14 is a cross-sectional view of part D-D in FIG. 12.

In the accompanying drawings, the figures are not necessarily drawn to scale.

Reference signs in specific embodiments are described as follows:

100: battery pack;
10: box; 11: accommodating space; 12: bottom case; 13: cover plate; 14: accommodating sub-chamber;
20: beam body; 21: preset cavity;
30: liquid cooling plate; 31: preset through hole; 32: liquid cooling connector; 33: weld joint; 34: flow channel;
40: insulating layer; and
50: battery cell.

## DESCRIPTION OF EMBODIMENTS

The following describes in detail embodiments of technical solutions of this application with reference to the accompanying drawings. The following embodiments are merely intended to describe the technical solutions of this application more clearly and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the descriptions of the embodiments of this application, "a plurality of" means more than two, unless otherwise specifically defined.

In this specification, reference to "embodiment" means that specific features, structures, or characteristics described with reference to the embodiment may be included in at least one embodiment of this application. The term "embodiment" appearing in various places in the specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "height", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the apparatuses or elements mentioned must have specific orientations or must be constructed or manipulated according to specific orientations, and therefore shall not be construed as any limitation on the embodiments of this application.

In the description of the embodiments of this application, unless otherwise specified and defined explicitly, the technical terms "mount", "connect", "join", and "fix" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in the embodiments of this application as suitable to specific situations.

In electric vehicles, a plurality of battery packs are used as a driving energy source. In the prior art, a battery pack includes a plurality of battery modules, and the plurality of battery modules are placed into a box. The battery module includes a beam body and several battery cells connected to the beam body. In order to improve the heat dissipation efficiency of the battery cell and reduce the temperature of the battery cell, a liquid cooling plate is attached to and welded to a surface of the beam body. A weld joint generated by welding can interfere with the battery cell. This affects the assembly of the battery cell. Additionally, since the burrs that may appear at the weld joint, the insulation protection between the weld joint and the battery cell cannot be implemented by a conventional method for performing insulation spraying on the liquid cooling plate. The burrs may pierce an insulating film wrapped around the battery cell, and then resulting in a short circuit.

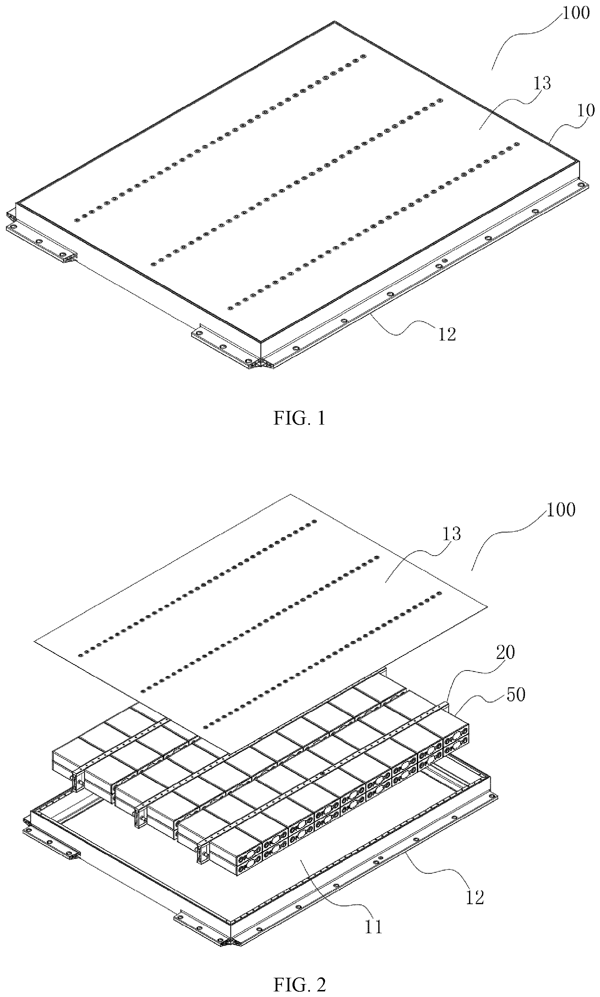

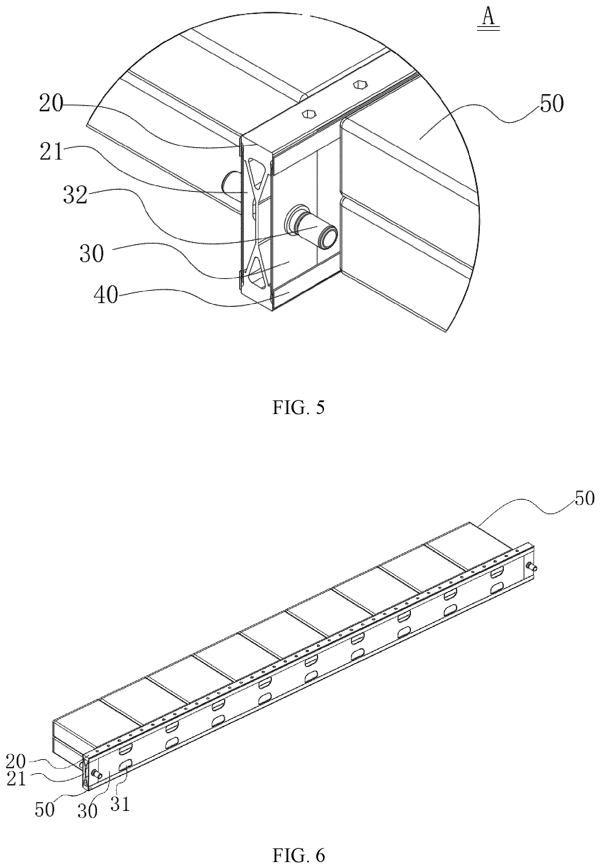

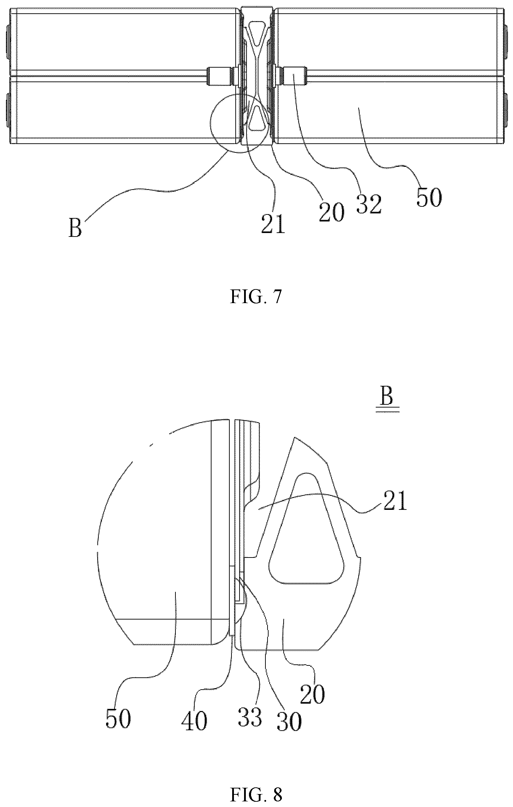

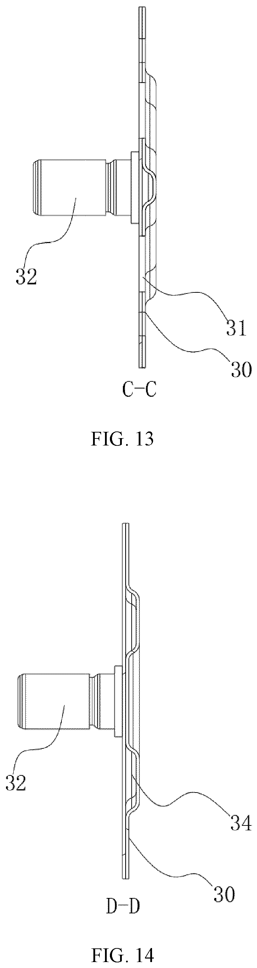

To solve the foregoing technical problem, referring to FIGs. 1 to 14, this application provides a battery pack 100 including a box 10, a beam body 20, a liquid cooling plate 30, an insulating layer 40, and a battery cell 50.

An accommodating space 11 is provided in the box 10. In a feasible embodiment, referring to FIGs. 1 and 2, the box 10 includes a bottom case 12 and a cover plate 13 that fit together, both of which can be made of aluminum to reduce the weight of the battery pack 100. The bottom case 12 is of a hollow structure having an opening at a top end, and the cover plate 13 is of a plate-shaped structure. The cover plate 13 covers the bottom case 12 to jointly define the accommodating space 11. The shape of the box 10 may be a cylinder, a cuboid, a cube, or the like. This is not limited herein.

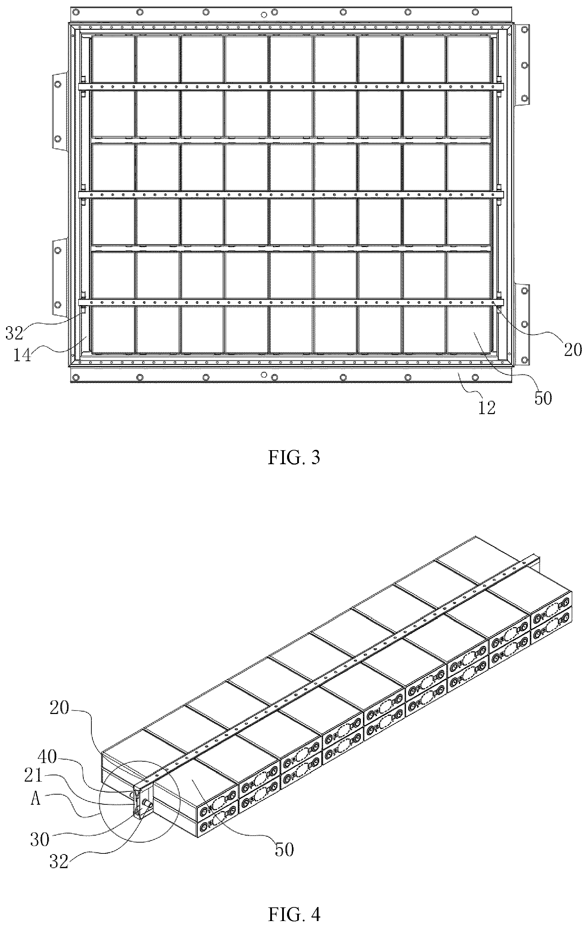

Referring to FIG. 3, the beam body 20 is disposed in the accommodating space 11 to divide the accommodating space 11 into several accommodating sub-chambers 14, the accommodating sub-chambers 14 are configured to accommodate several battery cells 50, and the beam body 20 is configured to enclose a side wall of the accommodating sub-chamber 14. The several battery cells 50 and the beam body 20 are connected to form a battery module. In a feasible embodiment, several beam bodies 20 are arranged in parallel at intervals in one direction to form several accommodating sub-chambers 14 sequentially distributed along this direction, so that the volume of the accommodating sub-chamber 14 is large, more battery cells 50 can be accommodated, the pack assembly efficiency of the battery pack is improved, and the assembling flatness of the battery cells 50 and the box 10 can be improved, facilitating installation. Persons skilled in the art can understand that the structure and installation method of the beam body 20 can be designed in various styles. For example, the beam body 20 includes a grid-like structure composed of several horizontal and vertical beams intersecting with each other perpendicularly. This is not limited herein.

Referring to FIGs. 4, 5, 6, 7, 8, and 12, the liquid cooling plate 30 is attached to one side of the beam body 20 facing the accommodating sub-chamber 14, a flow channel 34 is formed in the liquid cooling plate 30, and the flow channel 34 is configured to circulate a heat exchange medium. Specifically, the heat exchange medium may be water, ethanol, or other substances that can implement heat exchange, so as to perform heat exchange on a peripheral side of the battery cell 50. This improves the heat dissipation efficiency of the battery cell 50, and therefore, there is no need to additionally provide a heat exchange tube. This improves the space utilization within the battery pack 100, and avoids the increase in volume and weight of the battery pack 100 caused by tubes added, allowing the battery pack 100 to have higher energy density.

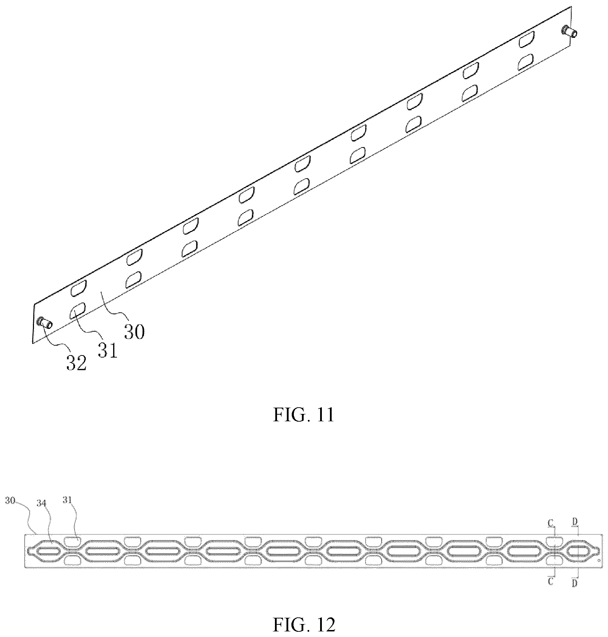

Referring to FIGs. 11 and 12, two ends of the liquid cooling plate 30 in a length direction are each provided with a liquid cooling connector 32 communicating with the flow channel 34. This allows the heat exchange medium to flow along an extension direction of the beam body 20 through a region where the battery cell 50 is located, increasing an area of the heat exchange medium flowing through the battery cell 50, thereby improving the heat exchange efficiency.

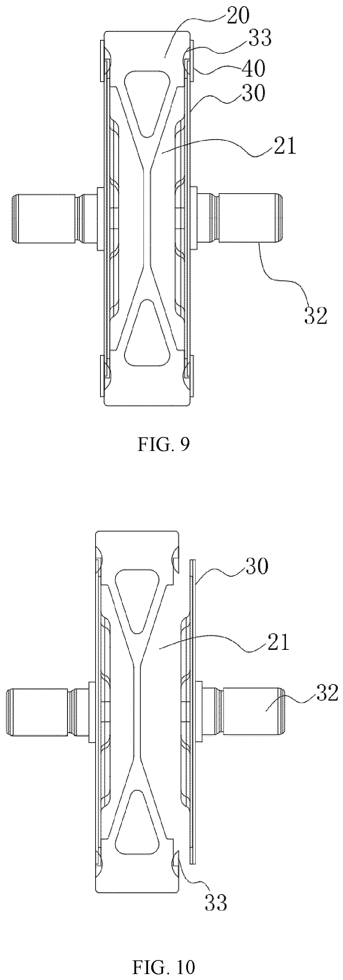

Referring to FIGs. 9 and 10, the liquid cooling plate 30 is connected to the beam body 20 through welding, and a weld joint 33 is formed at a welding position. The insulating layer 40 is attached to one side of the liquid cooling plate 30 facing the accommodating sub-chamber 14 and covers at least the weld joint 33. A surface of the liquid cooling plate 30 is first subjected to insulation spraying, and then the insulating layer 40 is attached to the weld joint 33 in a covering manner, thereby covering any burrs that may appear at the weld joint 33. This prevents the burrs from piercing an insulating film wrapped around the battery cell 50 and then resulting in a short circuit. This implements insulation protection between the weld joint 33 and the battery cell 50. In an embodiment provided by this application, referring to FIG. 9, two weld joints 33 are formed at each liquid cooling plate 30, and the two weld joints 33 are disposed at two ends in a height direction of the liquid cooling plate 30, so as to enhance the welding strength. Each weld joint 33 is correspondingly provided with the insulating layer 40.

Several battery cells 50 are disposed within the accommodating sub-chamber 14 and connected to the insulating layer 40 and the liquid cooling plate 30 to perform heat exchange with the liquid cooling plate 30.

In a feasible embodiment, the battery cell 50 is in direct close contact with the insulating layer 40 or adhered to the insulating layer 40 through a thermal conductive adhesive. The battery cell 50 is adhered to the liquid cooling plate 30 through the thermal conductive adhesive. The method using the thermal conductive adhesive not only enhances the connection strength between the battery cell 50 and the insulating layer 40, but also improves the heat exchange efficiency between the battery cell 50 and the insulating layer 40.

In an embodiment provided by this application, a plurality of battery cells 50 may be connected in series, parallel, or series-parallel, where being connected in series-parallel means a combination of series and parallel connections of the plurality of battery cells 50. The battery pack 100 may further include other structures. For example, the battery pack 100 may further include a busbar configured to implement electrical connection between the plurality of battery cells 50.

Each battery cell 50 may be a secondary battery or a primary battery, or may be a lithium-sulfur battery, a sodium-ion battery, or a magnesium-ion battery, but is not limited thereto. The battery cell 50 may be cylindrical, flat, cuboid, or in other shapes. This is not limited herein.

In this embodiment provided by this application, friction stir welding is used, allowing for a more secure connection between the liquid cooling plate 30 and the beam body 20. This avoids the separation between the battery cell 50 and the beam body 20 caused by the insufficient connection strength between the liquid cooling plate 30 and the beam body 20 when the battery pack 100 experiences vibrations. Additionally, the friction stir welding process is simple and provides good sealing performance and high production efficiency at low costs.

In this embodiment provided by this application, a height dimension of the insulating layer 40 satisfies a first formula, where

the first formula includes:

$$1.2*W1<W2,$$

where W1 represents a height of the weld joint 33, and W2 represents a height of the insulating layer 40. If W2 is excessively small, the weld joint 33 cannot be covered, leading to a risk of insulation failure; and if W2 is excessively large, a contact area of the thermal conductive adhesive between the battery cell 50 and the liquid cooling plate 30 is excessively small, which affects the adhesion strength between the battery cell 50 and the liquid cooling plate 30, and affects the heat exchange performance between the liquid cooling plate 30 and the battery cell 50.

In a feasible embodiment, the weld joint 33 extends along a length direction of the liquid cooling plate 30, and an extension direction of the insulating layer 40 matched with the weld joint 33 is consistent with an extension direction of the weld joint 33. The weld joint 33 is located at the middle of the insulating layer 40. The height of the insulating layer 40 satisfies the first formula, which not only provides effective insulation protection for the battery cell 50, but also allows the battery cell 50 to have high heat exchange efficiency.

In this embodiment provided by this application, the height dimension of the insulating layer 40 satisfies a second formula, where

the second formula includes:

$$4*W2<W3,$$

where W3 represents a width of the battery cell 50. In this embodiment provided by this application, the battery cell 50 is arranged horizontally, the width of the battery cell 50 extends along a direction of gravity, a part of the battery cell 50 is in close contact with the insulating layer 40, and the other part comes into contact with the liquid cooling plate 30 for heat exchange. A dimensional relationship of the insulating layer 40 and the battery cell 50 satisfies the second formula, a region of the battery cell 50 coming into contact with the insulating layer 40 is relatively small, and most of the region of the battery cell 50 comes into contact with the liquid cooling plate 30 for heat exchange. The heat exchange medium flowing in the flow channel 34 provided within the liquid cooling plate 30 carries away the heat from the battery cell 50, thereby cooling the battery cell 50.

In this embodiment provided by this application, a thickness dimension of the insulating layer 40 satisfies a third formula, where
the third formula includes:
0.5 mm<d<1.5 mm, where d represents a thickness of the insulating layer 40.

Specifically, the thickness of the insulating layer 40 is 0.6 mm, 0.7 mm, 0.8 mm, 0.9 mm, 1.1 mm, 1.2 mm, 1.3 mm, 1.4 mm, or the like. Certainly, the thickness of the insulating layer 40 may alternatively be other values within the foregoing range. This is not limited herein. If d is excessively large, an excessive gap is present between the liquid cooling plate 30 and the battery cell 50, and the thermal conductive adhesive may not be able to fully fill a gap between the liquid cooling plate 30 and the battery cell 50, affecting the adhesion strength and heat exchange performance between the battery cell 50 and the liquid cooling plate 30. Within the range of the third formula, the thickness of the insulating layer 40 can satisfy the insulation requirements without affecting the adhesion strength and heat exchange performance between the battery cell 50 and the liquid cooling plate 30.

In this embodiment provided by this application, a material of the insulating layer 40 includes but is not limited to a PC sheet, a TC composite tape, or mica paper, as long as the insulation protection requirements can be satisfied.

In this embodiment provided by this application, referring to FIGs. 4 to 6, the liquid cooling plate 30 is disposed on each of two opposite sides of the beam body 20 in a width direction. Several battery cells 50 are connected to the liquid cooling plate 30 on each side, allowing a single beam body 20 to simultaneously fix and cool the battery cells 50 on both sides. This arrangement can improve the cooling efficiency of the battery cells 50, improve the space utilization within the battery pack 100, and avoid an increase in volume and weight of the battery pack 100 caused by the beam body 20 added, allowing the battery pack 100 to have high energy density.

Still referring to FIGs. 4 to 6, in this embodiment provided by this application, several groups of battery cells 50 are provided in each accommodating sub-chamber 14, where the several groups of battery cells 50 extend along the length direction of the liquid cooling plate 30, each group of the battery cells 50 includes two battery cells 50, and the two battery cells 50 are stacked along the height direction of the liquid cooling plate 30. This arrangement can improve the cooling efficiency of the battery cells 50 and allow for an effect of uniformly cooling the upper and lower battery cells 50. Persons skilled in the art can understand that the number and distribution of the battery cells 50 within each group of the battery cells 50 can be determined according to the design of the flow channel 34 within the liquid cooling plate 30 or other component designs. This is not limited herein.

In this embodiment provided by this application, referring to FIG. 9, a preset cavity 21 is formed in the beam body 20, and the preset cavity 21 extends along a length direction of the beam body 20. A reinforcing rib can be provided within in the preset cavity 21 to enhance the overall strength of the beam body 20, avoiding a reduction in overall strength caused by the formation of the preset cavity 21. The preset cavity 21 can also reduce the weight of the beam body 20, thereby reducing the overall weight of the battery pack 100.

Referring to FIGs. 11 to 14, a preset through hole 31 is provided on the liquid cooling plate 30, and the preset through hole 31 sequentially runs through the liquid cooling plate 30 and a wall surface of the beam body 20 until the preset through hole 31 communicates with the preset cavity 21. The preset through hole 31 is provided away from the flow channel 34. At a position of the preset through hole 31, a cross-sectional area of the flow channel 34 is reduced, which can increase hydraulic pressure and improve the heat exchange efficiency.

Each preset through hole 31 corresponds to a first battery cell 50. The battery cell 50 is provided with an explosion-proof valve (not shown), a surface of the explosion-proof valve of the battery cell 50 is attached to the liquid cooling plate 30, and an exhaust end of the explosion-proof valve extends into the preset cavity 21 from the preset through hole 31. After thermal runaway of the battery cell 50, the explosion-proof valve is opened, and the ejected high-temperature gas and particulate substances are discharged into the preset cavity 21 of the beam body 20 through the preset through hole 31. The preset cavity 21 with a long path is conducive to reducing the temperature and decreasing the particulate substances, thereby lowering the risk of high-pressure failure caused by the ejected substances. This also saves an exhaust space within the battery pack 100 outside the beam body 20, improving the pack assembly efficiency and energy density of the battery pack 100.

Based on the foregoing embodiments, this application also provides an electric apparatus (not shown), including the foregoing battery pack 100, where the battery pack 100 is configured to supply electrical energy.

The foregoing electric apparatus may be but is not limited to a mobile phone, a tablet, a laptop computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

**Claims**

1. A battery pack, **characterized by**:

    a box with an accommodating space inside;
    a beam body, disposed in the accommodating space to divide the accommodating space into multiple accommodating sub-chambers;
    a liquid cooling plate, attached to a side of the beam body facing the accommodating sub-chamber, wherein the liquid cooling plate is connected to the beam body through welding, and a weld joint is formed at a welding position;
an insulating layer, attached to a side of the liquid cooling plate facing the accommodating sub-chamber and covering at least the weld joint; and
multiple battery cells, disposed within the accommodating sub-chamber and connected to the insulating layer and the liquid cooling plate to perform heat exchange with the liquid cooling plate.

2. The battery pack according to claim 1, wherein the welding is friction stir welding.

3. The battery pack according to claim 1, wherein a dimension of the insulating layer satisfies a first formula, wherein

    the first formula comprises:

    $$1.2*W1<W2,$$

    where W1 represents a height of the weld joint, and W2 represents a height of the insulating layer.

4. The battery pack according to claim 3, wherein the dimension of the insulating layer satisfies a second formula, wherein

    the second formula comprises:

    $$4*W2<W3,$$

    where W3 represents a width of the battery cell.

5. The battery pack according to claim 1, wherein a dimension of the insulating layer satisfies a third formula, wherein
    the third formula comprises:
    0.5 mm<d<1.5 mm, where d represents a thickness of the insulating layer.

6. The battery pack according to claim 1, wherein a material of the insulating layer comprises but is not limited to a PC sheet, a TC composite tape, or mica paper.

7. The battery pack according to claim 1, wherein the liquid cooling plate is disposed on each of two opposite sides of the beam body in a width direction.

8. The battery pack according to claim 7, wherein multiple groups of battery cells are provided in each of the accommodating sub-chambers, wherein the multiple groups of battery cells extend along a length direction of the liquid cooling plate, each group of the battery cells comprises two battery cells, and the two battery cells are stacked along a height direction of the liquid cooling plate.

9. The battery pack according to claim 1, wherein a preset cavity is formed in the beam body; a preset through hole is provided on the liquid cooling plate, and the preset through hole sequentially extends through the liquid cooling plate and a wall surface of the beam body until the preset through hole communicates with the preset cavity; and the battery cell is provided with an explosion-proof valve, and an exhaust end of the explosion-proof valve extends from the preset through hole into the preset cavity.

10. An electric apparatus, comprising the battery pack according to any one of claims 1 to 9, wherein the battery pack is configured to supply electrical energy.

FIG. 1

FIG. 2

FIG. 3

FIG. 4

FIG. 5

FIG. 6

FIG. 7

FIG. 8

FIG. 9

FIG. 10

FIG. 11

FIG. 12

32

31

30

C–C

FIG. 13

32

34

30

D–D

FIG. 14

## INTERNATIONAL SEARCH REPORT

| International application No. |
| --- |
| **PCT/CN2022/119031** |

**A. CLASSIFICATION OF SUBJECT MATTER**

H01M10/613(2014.01)i; H01M50/20(2021.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; DWPI; ENTXT; CNKI: 电池, 箱, 梁, 液冷板, 焊接, 绝缘层, battery, box, beam, liquid cooled plate, weld, insulation layer

**C. DOCUMENTS CONSIDERED TO BE RELEVANT**

| Category* | Citation of document, with indication, where appropriate, of the relevant passages | Relevant to claim No. |
| --- | --- | --- |
| Y | CN 217134482 U (GREAT WALL MOTOR COMPANY LIMITED) 05 August 2022 (2022-08-05) description, paragraphs 46-76, and figures 1-12 | 1-10 |
| Y | CN 112909401 A (FARASIS ENERGY (GANZHOU) CO., LTD.) 04 June 2021 (2021-06-04) description, paragraphs 4-82, and figures 1-14 | 1-10 |
| Y | CN 213601987 U (XIAMEN HITHIUM NEW ENERGY TECHNOLOGY CO., LTD.) 02 July 2021 (2021-07-02) description, paragraphs 34-60, and figures 1-5 | 1-10 |
| Y | CN 207183463 U (CITIC GUO'AN MGL POWER SCIENCE & TECHNOLOGY CO., LTD.) 03 April 2018 (2018-04-03) description, paragraphs 3-37, and figures 1-7 | 1-10 |
| A | JP 2009238389 A (SANYO ELECTRIC CO., LTD.) 15 October 2009 (2009-10-15) entire document | 1-10 |

☐ Further documents are listed in the continuation of Box C.    ☑ See patent family annex.

| | |
| --- | --- |
| \* Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **01 June 2023** | **05 June 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/119031**

| Patent document cited in search report | | | Publication date (day/month/year) | Patent family member(s) | Publication date (day/month/year) |
|---|---|---|---|---|---|
| CN | 217134482 | U | 05 August 2022 | None | |
| CN | 112909401 | A | 04 June 2021 | None | |
| CN | 213601987 | U | 02 July 2021 | None | |
| CN | 207183463 | U | 03 April 2018 | None | |
| JP | 2009238389 | A | 15 October 2009 | JP    5042096    B2 | 03 October 2012 |

Form PCT/ISA/210 (patent family annex) (July 2022)